Europäisches Patentamt

European Patent Office

Office européen des brevets

(19)

(11) Publication number: **0 431 577 A2**

## (12) EUROPEAN PATENT APPLICATION

(21) Application number: 90123273.6

(51) Int. Cl.⁵: **G11B 5/55, G11B 21/08**

(22) Date of filing: **05.12.90**

(30) Priority: **07.12.89 JP 318050/89**

(43) Date of publication of application:
**12.06.91 Bulletin 91/24**

(84) Designated Contracting States:
**DE FR GB**

(71) Applicant: **MATSUSHITA ELECTRIC INDUSTRIAL CO., LTD.**
**1006, Oaza Kadoma**
**Kadoma-shi, Osaka-fu, 571(JP)**

(72) Inventor: **Wakabayashi, Noriaki**
**21-46, Higashikorimotomachi**
**Hirakata-shi, Osaka-fu(JP)**
Inventor: **Shimizu, Ryosuke**
**8-5, Nishiyamaadachi**
**Yawata-shi, Kyoto-fu(JP)**

(74) Representative: **Eisenführ, Speiser & Strasse**
**Martinistrasse 24**
**W-2800 Bremen 1(DE)**

(54) **Data transducer positional apparatus.**

(57) A data transducer positioning apparatus is related to a velocity control system in the track seeking of the data transducer, to realize the superior seeking control by the estimation of the correcter data transducer velocity mainly from the servo information to be obtained in the intermittent way, the decoding of the passing track numbers through the passing track inner positions from the intermittent servo information, the production of the smoother reference velocity, whereby it is capable of free access to the disk shaped data record medium, and more particularly, an improved data transducer positioning apparatus provided with higher velocity, the higher reliability seeking performance.

Fig. 1

## TITLE OF THE INVENTION

DATA TRANSDUCER POSITIONAL APPARATUS
BACKGROUND OF THE INVENTION

The present invention relates to a data transducer positioning apparatus which is capable of free access to a disk shaped data record medium, and more particularly, to an improved data transducer positioning apparatus provided especially with higher velocity, higher reliability seeking performances.

In the conventional magnetic disc apparatus, a servo face servo (dedicated servo) system for positioning a data transducer in accordance with the servo information stored on a certain one face of the record medium faces of a plurality of disks is used (for example, Japanese Laid-Open Patent Application Tokaisho No. 52-4209). But the shifts in position between the servo face and the data face are easier to cause because of the difference in the thermal expansion of the disk plate. In order to remove the disadvantage, a data face servo system of storing the servo information on the data face itself is used. The data face servo system may be also divided into some systems. One of them is an embedded servo system (for example, Japanese Laid-Open Patent Application Tokaisho No. 58-146058) which is represented by a sector servo for positioning the data transducer in accordance with the intermittent servo information stored between the respective data sectors of the data face, instead of the servo face. This system does not need a servo face for exclusive use, a transducer for servo face exclusive use, an encoder or the like. The servo information is read by the use of a transducer for data use as it is, and the positional control is effected mainly by the electronic circuit processing. Therefore, as the mechanism is simpler, and the cost performance is better even when the number of the disks to be especially laminated is restricted, it is widely spread recently.

But the embedded servo system is not always good. The servo information is dispersingly (intermittently) scattered, recorded in locations like the clearances among the data sectors and the data sectors in, for example, the record data, with a disadvantage that the continuous servo information is not obtained in the conventional dedicated servo system. Therefore, the performance of the track positioning (track seeking and the track following) of the data transducer is not good. As the servo information is obtained only intermittently by way of example, the track follow control zone cannot be widened in the track follow time. Namely, the response property of the transducer with respect to the track vibration of the high frequency (vibration component) becomes worse. The worst problem is that the method of the track seeking (track accessing) of the transducer becomes difficult to perform. In the dedicated servo system, the continuous servo information is obtained, so that the number passed across the tracks is easy to count in accordance with the PES (Position Error Signal) signal to be generated from here. At the track seeking time, it may be correctly detected that where the data transducer is passing. As the embedded servo system is intermittent in the servo information, there is no telling at all how many tracks the servo information has passed across between the servo information and the servo information. Namely, the track counting operation cannot be effected.

As in, for example, Japanese Laid-Open Patent Application Tokaisho No. 51 - 131607, there is disclosed an improved example where the track number is recorded in one portion of the intermittent servo information so that it may be understood which track the data transducer crossed for the first time when the data transducer passed there. There is a case where an absolute address number is given to the track number (track address) or a case where an incremental address number which repeats at a certain cycle is given. In this manner, the correct track seeking (accessing) may be effected if the number of the tracks crossed cannot be counted between the servo information and the servo information.

As the recognition of the track number is intermittent even in such a case, the behavior of the transducer cannot be grasped yet in sufficient detail, with many problems in the control performance. Especially, there are often a problem in a transient low velocity condition, immediately before the track follow control is reached, at the end of the track seeking. Concretely, in a transient condition immediately before the shifting to the track follow control from the track seek, the velocity of the data transducer cannot be controlled with sufficient stability. As a result, the data transducer considerably overshoots beyond the reference track or conversely undershoots, with a problems that the setting time required for the on track to be provided becomes longer. In the worst case, it overruns the track or goes backward into a different track, with a problem that the probability of seek errors becoming higher.

SUMMARY OF THE INVENTION

Accordingly, an essential object of the present invention is to provide a data transducer positioning apparatus for use in a velocity control system in the track seeking (accessing) of the data transducer, wherein the superior seeking control (closed loop velocity control) can be realized by the estimation of the velocity of the correcter data transducer velocity mainly from the servo information to be obtained in the intermittent way (sample time T), the decoding of the number (address) of the passing tracks or the passing track inner positions from the intermittent servo information, the production, from them, of the smoother reference velocity (instruction) than before. Another object of the present invention is to provide a data transducer position apparatus, which has an effect in that the overshooting and the undershooting of the data transducer can be prevented in the shifting into the track follow-up control by the sufficiently stable controlling of the velocity of the data transducer in the transient condition immediately before the shifting to the track follow-up control from the track seeking operation although it is an embedded servo system where servo information is obtained only by the intermittent operation, the setting time required before the on track is provided can be shortened by it, namely, the average seeking time can be shortened, with an effect that the velocity may be made higher. A further object of the present invention is to provide a data transducer position apparatus, which has an effect that the provability of seek errors of entering into different tracks by the overrunning of the tracks or the returning is reduced, and the reliability can be increased, and, also, because of a data face servo system with the servo information being stored on the data face called the embedded servo system, a superior effect is also provided in that the data transducer may be tracked with higher accuracy with respect to the thermal changes.

In accomplishing these and other objects, according to the present invention, there is a data transducer positioning apparatus which comprises at least one rotatable disk shaped information record medium, servo information recorded intermittently in advance on the medium, a data transducer which is capable of accessing to the optional information track on the medium and can at least regenerate the contents thereof, a servo information demodulating means for taking out the above described intermittent servo information from the output of the data transducer, a positional decoder means for intermittently recognizing the position signals of the above described data transducer from the output, further a positioner means for freely moving the above described data transducer on the above described information medium, a velocity estimating means including at least one of an integral element or a low pass filter element so as to obtain the approximately continuous estimated velocity signal of the above described data transducer with the value of a driving current flowing into the positioner means and the value of the intermittent position signal of the above described data transducer being provided as inputs, a construction of velocity controlling the above described data transducer in accordance with the estimated velocity, and which is characterized in that the velocity estimating means is adapted to include a subtracting element for calculating the error between an estimated position signal to be obtained from the estimated velocity signal and the above described intermittent position signal, or the error between the above described estimated velocity signal and the intermittent velocity signal to be obtained from the above described intermittent position signal, further, an element for feedbacking the error signal from the subtraction element to the above described velocity estimating means, or which comprises at least one rotatable disk shaped information record medium, servo information recorded intermittently in advance on the medium, a data transducer which is capable of accessing to the optional information track on the medium and can at least regenerate the contents thereof, a servo information demodulating means for taking out the above described intermittent servo information from the output of the data transducer, a positional decoder means for intermittently recognizing the position of the above described data transducer from the output thereof, and which is characterized in that the positional decoder means is provided with a track address decoder and a track inner position decoder for respectively decoding the number or the address of the tracks in which the above described data transducer exits or passes, and the position within the track, further is provided with a means for outputting the reference velocity functioned in accordance with the number of the remaining tracks or the remaining distance on the movement of the data transducer into the selected track at the track access time in accordance with the intermittent position signal of the above described data transducer to be obtained from these decoders, a velocity smoother means for interpolating or accommodate the output of the reference velocity which is stage shaped for each sample time, a construction having these added for finally forming the reference velocity instruction signal of the above described data transducer with these being added so as to velocity control the above described data transducer in accordance with it.

The data transducer positioning system of the present invention is adapted to estimate continuously and more correctly than before the velocity of the data transducer from the servo information by the use of the above described velocity estimating means even in the embedded servo system where the servo information is provided only intermittently, then, to decode the track number (track address) the data transducer passed as described hereinabove or the passing track inner position, further is adapted to obtain the superior control performance in a velocity control at the track seek (access) time of the data transducer by the realization of the closed loop control after the generation of the smoother reference velocity (instruction) signal than before from them as described hereinabove. Concretely, according to the data transducer positioning system of the present invention, a function of preventing the overshooting and the undershooting is provided in the shifting into the track follow control by more continuous and smoother, instead of intermittent or stage shaped, control operation of the velocity of the data transducer in a transient condition immediately before the shifting into the track follow control from the track seek even in the embedded servo system where the servo information is provided only intermittently. As a result, a function of shortening the setting time required before the on track is provided, namely, a function of making the track seek higher in velocity is provided. Also, a function of reducing the seek error probability in the overrunning of the track, the backward movement into the different track, namely, a function of increasing the reliability in the track seek is provided.

## BRIEF DESCRIPTION OF THE DRAWINGS

These and other objects and features of the present invention will become apparent from the following description taken in conjunction with the preferred embodiment thereof with reference to the accompanying drawings, in which;

Fig. I is a fundamental block diagram of a positioning apparatus of a data transducer in one embodiment of the present invention;

Fig. 2 is a pattern view in one embodiment of an intermittent servo information embedded previously in the information track on the face of the disk shaped information medium I in one embodiment of the present invention shown in Fig. 1;

Fig. 3 (a), (b), (c) are graphs for illustrating a method of generating a reference velocity instruction signal in one embodiment of the present invention shown in Fig. 1;

Fig. 4 is a control block diagram with a fundamental block diagram of the positioning apparatus of the data transducer in one embodiment of the present invention shown in Fig. 1 being represented as a velocity control system of a closed loop;

Fig. 5 (a), (b), (c), (d), (e) respectively show a block diagram in an embodiment of a velocity estimator 16 in a a control block diagram shown in Fig. 4; and

Fig. 6 is a circuit diagram of an integrator or a LPF (Low Pass Filter) in a velocity estimator 16.

## DETAILED DESCRIPTION OF THE INVENTION

Before the description of the present invention proceeds, it is to be noted that like parts are designated by like reference numerals throughout the accompanying drawings.

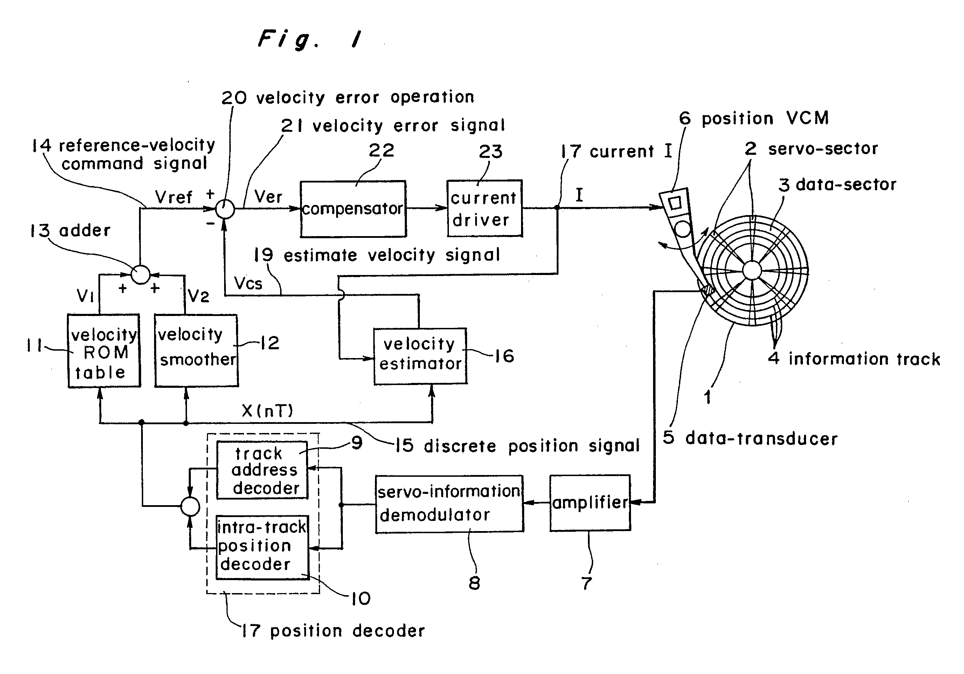

Referring now to the drawings, there is shown in Fig. 1, a data transducer positioning apparatus in a fundamental block diagram in one embodiment of the present invention, which includes a disk shaped information medium 1 such as magnetic disk or the like to be rotated by a spindle motor (not shown), servo sectors 2 embedded (recorded) in advance in the medium face so as to record the intermittent servo information, a data sector 3 for recording the data, information tracks 4 provided by plurality on the medium face, a data transducer 5 which is capable of reading, writing or at least reproducing the information on the information tracks, a positioner VCM (Voice Coil Motor) 6 which causes the data transducer to move (access) to the selected information track, a amplifier 7 for amplifying the reproducing signals from the data transducer, a servo information demodulator 8 which detects the servo information of the intermittent servo sectors from among the reproducing signals to take it out with the sampling (sample period T), a positional decoder 17, a track address decoder 9 and a track inner positional decoder 10 of the positional decoder which decode the passing track numbers (track addresses) or the passing track inner positions of the data transducer from the outputs of the above described servo information demodulator, an intermittent position signal (nT) 15 of the data transducer formed from these decoders, with n being an integer, a means 11 such as a velocity ROM (Read Only Memory) table for outputting the reference velocities of the data transducer in accordance with the intermittent position signal, where the reference velocity functioned in accordance with the number of the remaining tracks or the remaining interval in the movement the data transducer to the selected track is prepared previously in the ROM (Read Only Memory) in the table, a means for outputting the reference velocities may be a means where the function calculation is effected in accordance with the number of the remaining tracks or the remaining intervals so as to output the reference velocities, instead of the previously prepared ones, a velocity smoother 12 which is adapted to interpolate or accommodate the output of the velocity ROM table which is stage shaped for each of the sampling time T, an adder 13 for adding the velocity ROM table 11 and the velocity smoother 12 to form a reference velocity instruction signal (Vref) 14 of the data transducer, a velocity estimator 16 which more correctly estimates the velocities of the data transducer from the intermittent position signal 15 and the current (I) 17 to be fed to the positioner VCM 6 so as to calculate the estimated velocity signal (Ves) 19, a velocity error computer 20 for computing the velocity error (Ver = Vref-Ves), a velocity error signal Ver 21, a compensator 22 for compensating the negative feedback loop of a velocity control system, a current driver 23 for feeding the current I to the positioner VCM of 6 in accordance with the compensator output.

The data transducer positioning system of the present invention as can be understood from the fundamental block diagram of the Fig. 1 is related to a velocity control system in the track seeking (accessing) of the data transducer, and is to realize the superior seek control by the estimation of the correcter, continuous data transducer velocity mainly from the servo information to be obtained intermittently (sample time T), and the production of the smoother reference velocity (instruction). The overshooting and the undershooting of the data transducer is to be prevented in the shifting into the track follow-up control by the sufficiently stable controlling of the velocity of the data transducer in the transient condition immediately before the shifting to the track follow-up control from the track seeking operation.

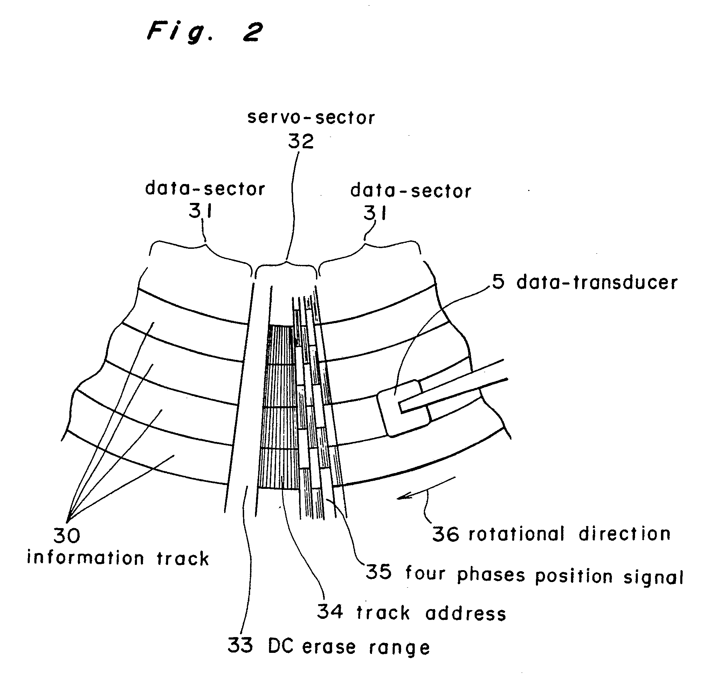

Fig. 2 is a pattern view in one concrete example of the intermittent servo information embedded previously in the information track on the face of the disk shaped information medium 1 in one embodiment of the present invention shown in Fig. 1. Especially, the view shows the enlargement of one portion of the disk. In the drawing, reference numeral 30 shows the information tracks of a plurality of concentric circle shape (or spiral shape), reference numeral 31 is a region of the data sector, reference numeral 32 is a region of a servo sector provided intermittently among the data sectors, with the servo information being embedded in the servo sector 32, reference numeral 33 is a nonrecord region in a DC erased region, wherein the start of the servo sector is recognized, reference numeral 34 is a region with the track addresses being recorded, wherein the track addresses may be recorded in gray code so as to minimum the recognition errors, they may be recorded in the absolute addresses or in the repetitive code pattern, reference number 35 is a four-phase position signal pattern, which is the servo information for recognizing the position within the track, the arrow mark of 36 shows the rotating direction of the disk shaped information medium. By the reproduction through the data transducer 5 of such servo information embedded in advance, the track address with the data transducer exists in it and the track inner position thereof are adapted to be discriminated for each sampling time (time required for the servo sector to pass) T.

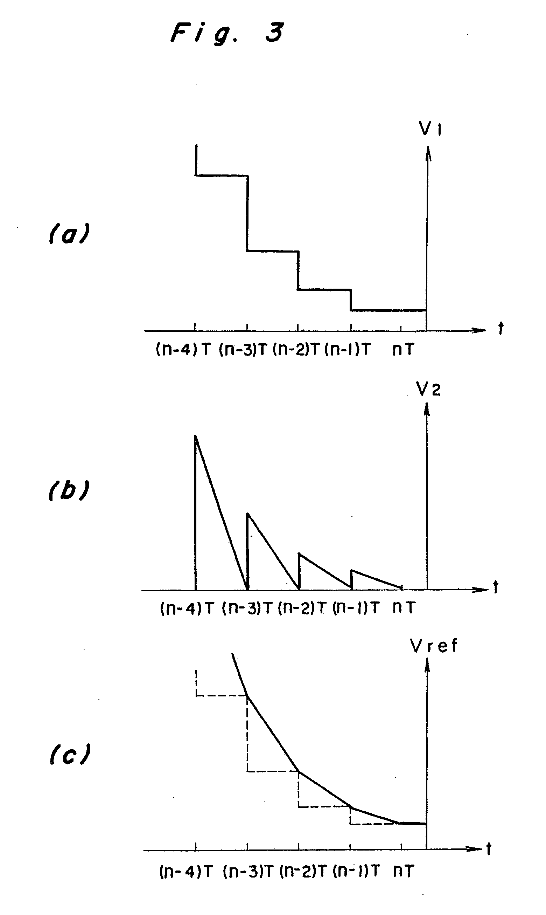

Fig. 3 (a), (b), (c) are charts for illustrating the method of generating the reference velocity instruction signals in one embodiment of the present invention shown in Fig. 1. Fig. 3 (a) is a chart showing the reference velocity signals which read the velocity ROM table 11 for each sampling time T. Here is shown a case of the transient velocity reduction condition, immediately before the track flow-up control is reached, at the end of the track seek control. The reference velocity is obtained by the reading of, for example, the reference velocity functioned in advance in accordance with the number of the remaining tracks or the remaining interval. Concretely, in the present embodiment, a method of recognizing the track address which has passed from the track address decoder 9, the interpolating position within the track from the track inner position decoder 10, obtaining the remaining interval to the reference track, referring to the velocity ROM table 11 is adopted. As can be understood from Fig. 3 (a), the output VI of the velocity ROM table 11 is stage shaped. To make it, as it is, the reference velocity instruction signal of the data transducer is not desired from the view point of the velocity follow-up property, because the smoothness is not provided. Namely, when the reference velocity instruction has been changed into the stage shape, the velocity cannot follow up immediately, so that the errors which cannot be controlled are caused.

Fig. 3 (b) is a chart showing the output of the velocity smoother 12, which tries to interpolate or accommodate the output of the velocity ROM table 11 which is stage shaped for each sampling time T. The velocity smoother generates a saw tooth shaped signal V2 which smoothly fills in the output of the stage shaped velocity ROM table. The wave height value (the height of the peak of the saw tooth shaped wave) is determined by the size of the reference velocity signal of the velocity ROM table 11 to be read for each T time. Normally it is ascertained that the reading from the ROM table with the wave height values with respect to the size of the reference velocity signal being filled in is simple and effective.

Fig. 3 (c) is a chart showing a reference velocity instruction signal (Vref) 14 of a data transducer formed through the addition, by an adder 13, of a reference velocity signal of the output of the velocity ROM table 11 and the output of the velocity smoother 12. This shows a case of a transient velocity reduction condition, immediately before the track follow-up control is reached, at the end of the track seek control in accordance with the Fig. 3 (a), (b). As understood from Fig. 3 (c), the reference velocity instruction signal (Vref) of the data transducer which is desirably smooth from the point of view of the velocity follow-up property can be obtained.

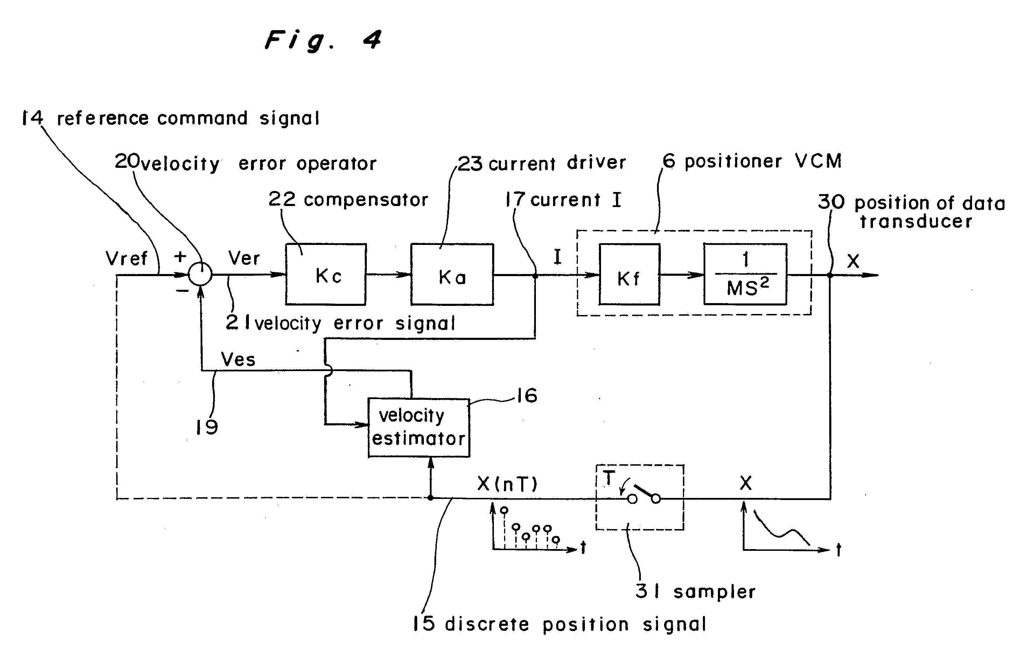

Fig. 4 is a control block diagram expressing as a velocity control system of a closed loop the fundamental block diagram of the positioning apparatus of the data transducer in one embodiment of the present invention shown in Fig. 1.

In the diagram, there are included a reference velocity instruction signal (Vref) 14 of the data transducer, an estimated velocity signal (Ves) 19, a velocity error computer 20 for calculating the velocity error (Ver = Vref-Ves), a velocity error signal (Ver) 21, a compensator 22 of a gain Kc for compensating the negative feedback loop of the velocity control system, a current driver 23 of the gain Ka which feeds the current I into the positional VCM, a current (I) 17 to be fed into the positional VCM 6, a positioner VCM 6 including a force constant (Kf) 6a of the VCM, and an inertia $(1/Ms^2)$ 6b, where s is the s of Laplacean, M is an inertia, a position X 30 of a data transducer, a sampler (sample period T) 31 is an element which is necessarily generated by a fact that the servo information (information showing the position X of the data transducer) is intermittent in the embedded servo system, an intermittent position signal X (nT) 15, with an integer being n, a velocity estimator 16 which more correctly estimates the velocity of the data transducer from the current (I) 17 so as to calculate the estimated velocity signal (Ves) 19. In the diagram, the same numerals are given to the equivalent functions as those of Fig. 1. As can be understood from Fig. 4, the data transducer is velocity controlled to follow in value the reference velocity instruction signal (Vref). Although the reference velocity instruction signal (Vref) 14 is composed of an intermittent position signal 15, it has no direct relation in the control system.

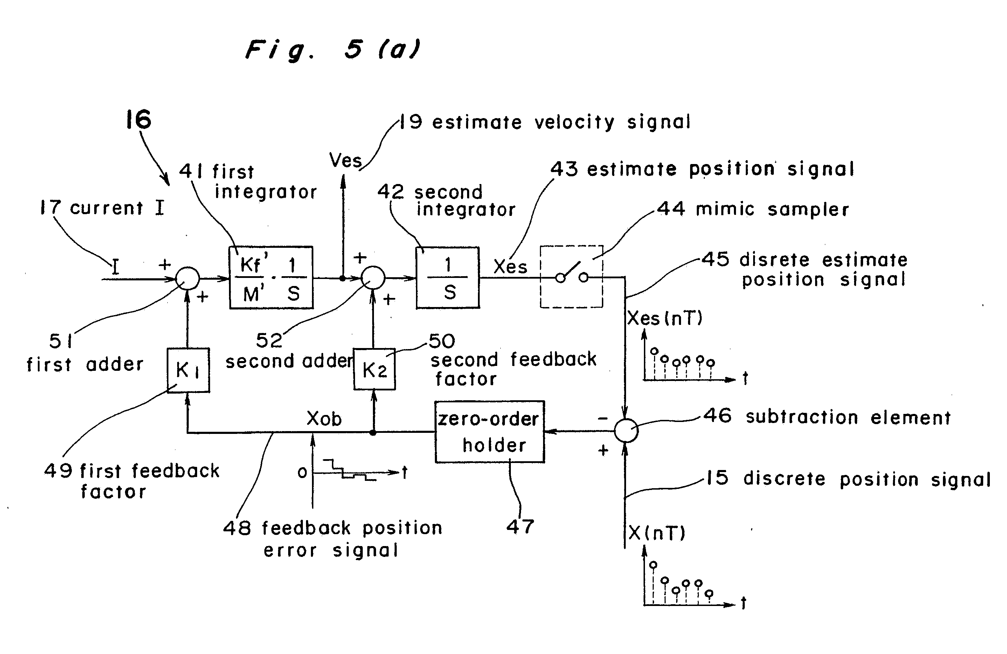

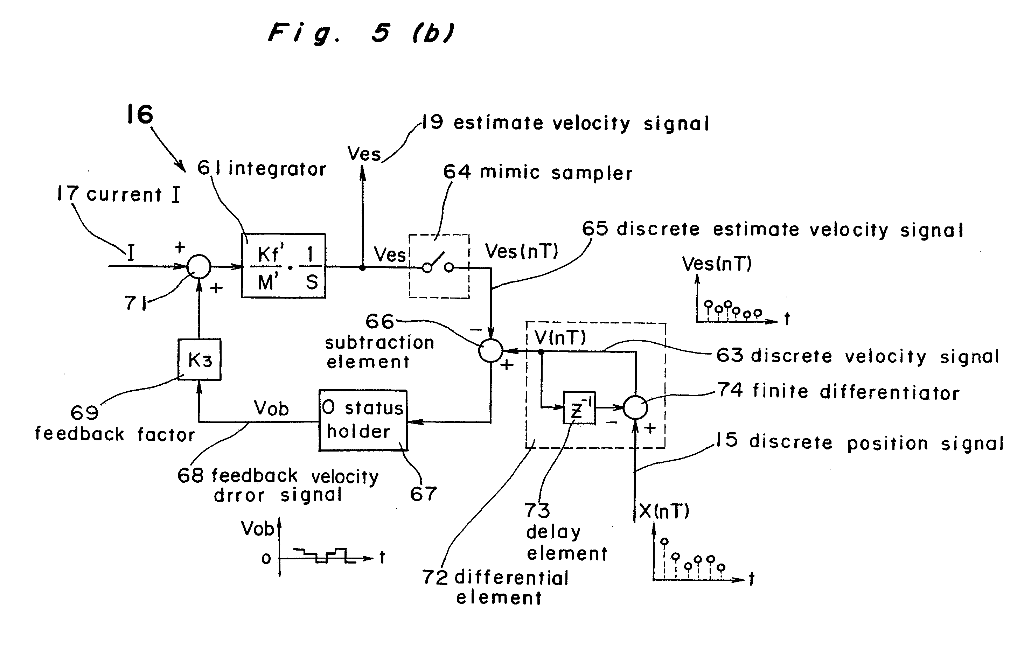

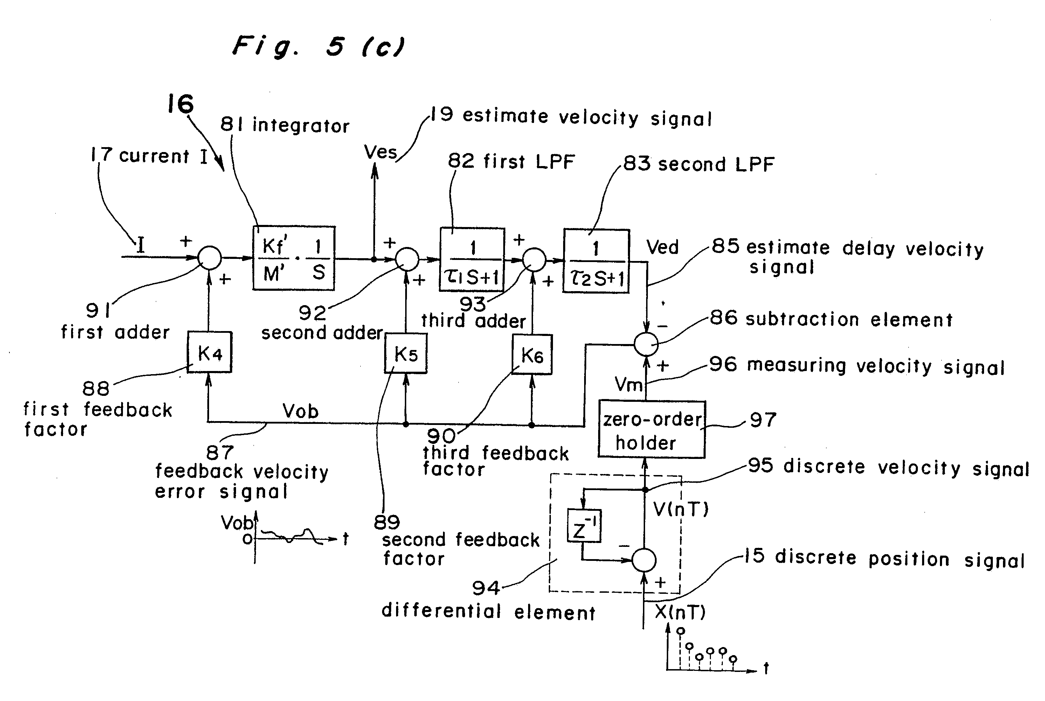

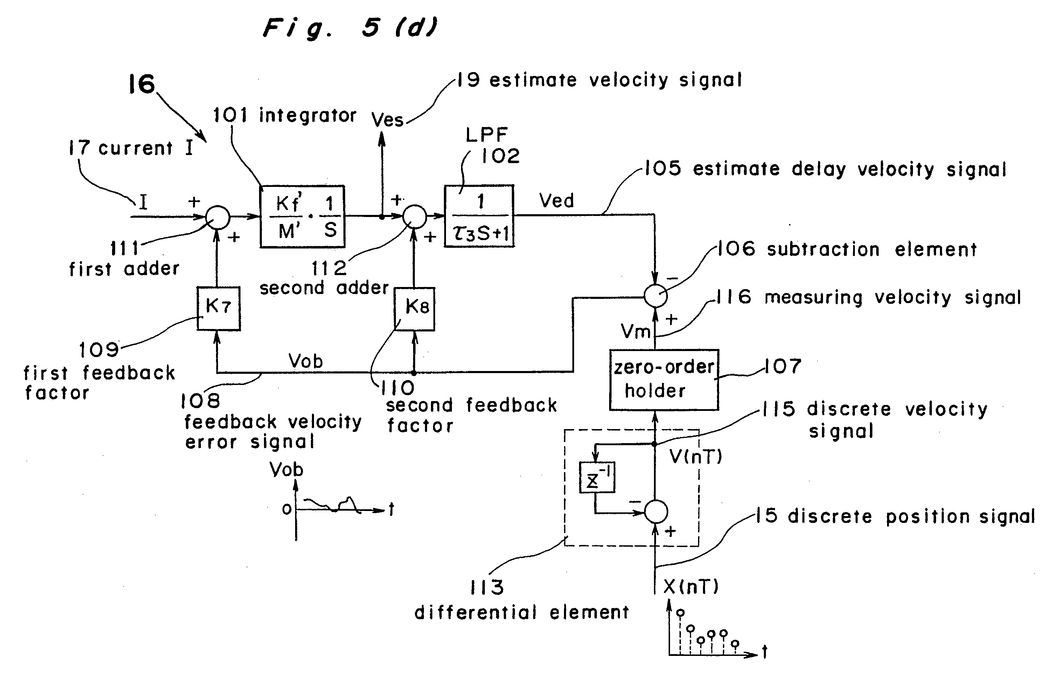

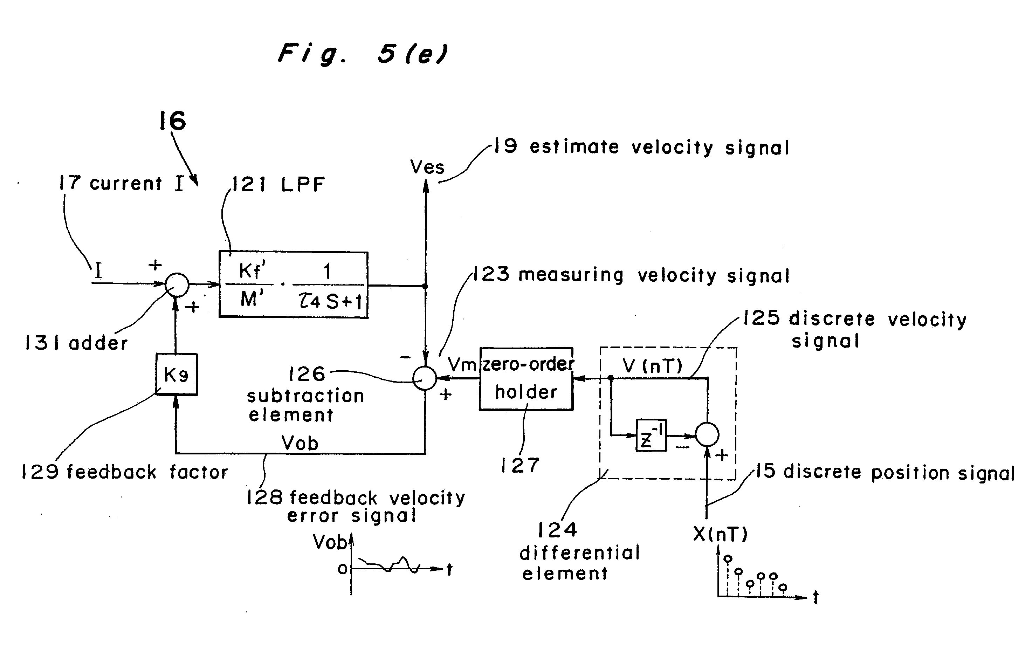

Fig. 5 (a), (b), (c), (d), (e) are respectively the block diagrams in the concrete example of the velocity estimator 16 of the control block diagram to be shown in Fig. 4. Fig. 5 (a) is a first concrete example, wherein reference numeral 17 is a current I to be fed to the positioner VCM 6, reference numeral 41 is a first integrator composed of, for example, an operational amplifier. The element is Kf'/(M'.s), so that kf' = Kf, M' = M. Here the s is the s of Laplacean. The first integrator is adapted to simulate the conversion element into the velocity of the data transducer from the current of the positioner VCM, with the 19 of the output becoming an estimated velocity signal Ves. Reference numeral 42 is a second integrator, which is also composed of, for example, an operational amplifier with the estimated position signal (Xes) 43 being made through the integration of the estimated velocity signal Ves. The second integrator simulates the conversion element into the position from the velocity of the data transducer. Reference 44 is a simulation sampler. The estimated position signal Xes is sampled for each time for the servo information of the embedded servo to be detected (time for the servo section to pass, namely, the sample period T) so as to generate the intermittent estimated position signal Xes (nT). The simulator sampler is adapted to simulate that the intermittent position signal X (nT)- to be obtained from the servo information which may be estimated is intermittent. Namely, the sampler 31 of Fig. 4 is supplied. As the construction of the above described simulation circuit is mainly composed of an integrator, it becomes gradually different from the behaviors of the actual positioner VCM 6, the data transducer 5 as time passes. Namely, the simulation (estimation) errors become larger. The feedback elements are made to be attached to the simulation circuit so as to reduce the simulation errors as the time passes. Therefore, the construction given hereinafter is further added. Reference numeral 46 is a subtraction element for subtracting the intermittent estimated position signal Xes (nT) from the intermittent position signal X (nT) 15. Reference numeral 47 is a zero order holder which is a conversion element which converts the intermittent signal into the continuous amount. Reference numeral 48 is a feedback positional error signal Xob of the output of the 0 degree holder, which is multiplied respectively by a feedback coefficient (kl) 49, a feedback coefficient (K2) 50 so as to be added into the current I of 17 by a first adder 51, into the estimated velocity signal Ves of 19 by a second adder 52. It is known on the control theory that such a feedback element is composed of an element, namely, a subtracting element, which obtains the difference thereof through the comparison between a measurable variable and an estimated variable (here a intermittent position signal X (nT) and an intermittent estimated position signal Xes (nT) estimated by the simulation circuit) corresponding to it, and an element for feedbacking it onto the input side by the multiplication of the error to be obtained from here by a proper coefficient (here HI, X2). Errors, if any, between the actual variable and the variable in the simulation circuit corresponding to it are removed as the time passes. Namely, the simulation circuit can estimate the actual system faithfully. Here more desirable velocity control may be realized by the use of the estimated velocity signal Ves obtained in this manner. The zero order holder 47 in the feedback element is necessary for the conversion into the continuous time system from the intermittent time system. The zero order holder may be inserted before the subtraction by the subtraction element 46. In this case, the insertion has to be effected into both of the intermittent estimated position signal 45 and the intermittent position signal 15, and the subtraction element 46 has to effect the continuous system subtraction processing operation. Also, the first, second integrators 41, 42 respectively may be a first degree of LPF (Low Pass Fighter) which is low in the cutoff frequency.

In Fig. 5 (b) is a second concrete example of the velocity estimator 16, wherein reference numeral 17 is a current I to be fed into the positioner VCM 6, reference numeral 61 is an integrator composed of, for example, an operational amplifier. The element is Kf'/(M'.s), so that Kf' = Xf, M' = M. Even here, the $ is the s of the Laplacean. The integrator is to simulate the conversion element into the data transducer from the current of the positioner VCM, with the output 19 thereof becoming an estimated velocity signal Ves. Reference numeral 64 is a simulation sampler, wherein the estimated velocity signal Ves is sampled for each time (time for the servo sector to pass, namely, sample period T) for the servo information of the embedded servo to be detected so as to generate the intermittent estimated velocity signal Ves (nT). The intermittent operation of the velocity by the simulation sampler is adapted to simulate that the intermittent position signal X (nT) to be obtained from the measurable servo information is intermittent, the velocity information to be calculated from it is intermittent. Since the construction of the above described simulation circuit is mainly composed of an integrator, it becomes gradually different from the behaviors of the actual positioner VCM 6, the data transducer 5 as time passes. Namely, the simulation (estimation) error becomes larger. The feedback element is attached to the simulation circuit so as to reduce the simulation errors as the time passes. Therefore, the following construction is further added. One 72 of them is a differential element which differentiates the intermittent position signal X (nT) to obtain the intermittent velocity signal V (nT) 63, and includes a delay element 73, a difference subtracter 74. Concretely, a signal X ( (n-l) T) before the last signal is subtracted from the intermittent position signal X (nT) detected by the difference subtracter so as to calculate the velocity. The signal X ((n-l) T) before the last signal is a signal before one sample (before the T time), which is stored in a delay element (storage element) $z^{-1}$ such as shift resister, memory. Here the z is an operator of the z conversion. Reference numeral 66 is a subtraction element for subtracting the intermittent estimated velocity signal Ves (nT) from the intermittent velocity signal V (nT) 63.

Reference numeral 67 is a zero order holder of the conversion element for converting the intermittent signal into a continuous amount. Reference numeral 68 is a feedback velocity error signal Vob of the output of the zero order holder, which is multiplied by the feedback coefficient (K3) 69 so as to be added into the current I of the 17 by the adder 71. It is known on the control theory that such a feedback element is composed of an element, namely, a subtraction element, which obtains the difference thereof through the comparison between a measurable variable and an estimation variable (here an intermittent velocity signal V (nT) and an intermittent estimation position signal Ves (nT) estimated by the simulation circuit) corresponding to it, and an element for feedbacking it onto the input side through the multiplication of the error to be obtained from here by a proper coefficient (here K3). Errors, if any, between the actual variable and the variable in the simulation circuit corresponding to it are removed as the time passes. Namely, the simulation circuit can estimate the actual system faithfully. Even here more desirable velocity control may be realized by the use of the estimated velocity signal Ves obtained in this manner. The zero order holder 67 in the feedback element is necessary for the conversion into the continuous time system from the intermittent time system, because it is an intermittent time system. The zero order holder may be inserted before the subtracting operation is effected by the subtraction element 66. In this case, the insertion has to be effected into both of the intermittent estimated velocity signal 65 and the intermittent velocity signal 63, and the subtraction element 66 has to effect the continuous system subtraction processing operation. The concrete example of Fig. 5 (b) is characterized in that the subtraction processing by the subtraction element becomes simpler by a portion where the position has been changed into the velocity as compared with Fig. 5 (a). Also, the integrators 61 here respectively may be a first degree of LPF (Low Pass Filter) which is low in the cutoff frequency.

In Fig. 5 (c) is a third concrete example of the velocity estimator 16, wherein reference numeral 17 is a current I to be fed into the positioner VCM 6, reference numeral 81 is an integrator composed of, for example, an operational amplifier, the element is Kf'/(M' .s), so that Kf' = Kf, M' = M. Even here, the s is the s of the Laplacean. The integrator is to simulate the conversion element into the data transducer from the current of the positioner VCM, with the output 19 thereof becoming an estimated velocity signal Ves. Also, the integrator 81 may be a first degree LPF (Low Pass Filter) which is low in the cutoff frequency. Reference numerals 82 and 83 are respectively a different first first degree LPF (Low Pass Filter) and a second first degree LPF.

The two are adapted to simulate in analogue a differential element 84 which differentiates by the difference subtraction method the intermittent position signal X (nT) 15 to be obtained from the measurable servo information so as to calculate the intermittent velocity information (intermittent velocity signal V (VnT) 95), and a zero order hodler 97 which is a conversion element for converting it into the continuous amount. The operation of the differential element 94 in the embodiment is a retrograding difference retracting method, and is approximated with such a dead time transfer function as shown in the following equation except for the sampling operation.

$$\exp\left(-\frac{1}{2}Ts\right)$$

Also, the transfer function of the zero order holder can be approximated in the follow equation with the sampling operation being taken into consideration.

$$\frac{1 - \exp(-Ts)}{Ts}$$

As these transfer functions show respectively delay time elements, they may be respectively expressed approximately with the first degree of LPF. In the third concrete example of Fig. 5 (c), it is approximated with the first first-degree LPF of 82 and 83 and the second first-degree LPF. Reference numeral 85 is an estimated delay velocity signal Ved obtained from them. Since the construction of the above described simulation circuit is mainly composed of an integrator and a LPF, it becomes gradually different from the behaviors of the actual positioner VCM 6, the data transducer 5 as the time passes. Namely, the simulation (estimation) error becomes larger. The feedback element is attached to the simulation circuit so as to reduce the simulation errors as the time passes. Therefore, the following construction is further added. One 94 of them is a differential element which differentiates the intermittent position signal X (nT) 15 to obtain the intermittent velocity signal V (nT) 95, and is the same as the differential element 72 of Fig. 5 (b). Then, reference numeral 97 is the zero order holder of the conversion element for converting the intermittent velocity signal V (nT) into the measured velocity signal Vm 96 of the continuous amount. Then reference numeral 86 is a subtraction element for subtracting the estimated delay velocity signal Ved from the measured velocity signal Vm. Reference numeral 87 is a feedback velocity error signal Vob of the output thereof, which is multiplied respectively by a feedback coefficient (k4) 88, a feedback coefficient (K5) 89, a feedback coefficient (K6) so as to be added into the current I of 17 by a first adder 91, into the estimated velocity signal Ves of 19 by a second adder 92, into the output of the first LPF by a third adder 93. It is known on the control theory that such a feedback element is composed of an element, namely, a subtracting element, which obtains the difference thereof through the comparison between a measurable variable and an estimation variable here a measurement velocity signal Vm, and an estimated delay velocity signal Ved estimated by the simulation circuit) corresponding to it, and an element for feedbacking it onto the input side through the multiplication of the error to be obtained from here by a proper coefficient (here K4, K5, K6). Errors, if any, between the actual variable and the variable in the simulation circuit corresponding to it are removed as the time passes. Namely, the simulation circuit can estimate the actual system faithfully. Even here more desirable velocity control may be realized by the use of the estimated velocity signal Ves obtained in this manner.

Fig. 5 (d) is a fourth concrete example of the velocity estimator 16, wherein reference numeral 17 is a current I to be fed into the positioner VCM 6, reference numeral 101 is an integrator composed of, for example, an operational amplifier, the element is Kf'/(M'.s), so that Kf' = Kf, M' = M. Even here, the s is the s of the Laplacean. The integrator is to simulate the conversion element into the data transducer from the current of the positioner VCM, with the output 19 thereof becoming an estimated velocity signal Ves. Also, the integrator 101 may be a first degree LPF (Low Pass Filter) which is low in the cutoff frequency. Reference numeral 102 is a different first first-degree LPF (Low Pass Filter). This is adapted to simulate in analogue the differential element 113 which differentiates by the difference subtraction method the intermittent position signal X (nT) to be obtained from the measurable servo information so as to calculate the intermittent velocity information (intermittent velocity signal V (nT) 115) and the zero order holder 107 which is a conversion element for converting it into the continuous amount. The operation of the differential element 94 in the embodiment is a retrograding difference retracting method, and is approximated with a dead time transfer function similar to a case of Fig. 5 (c) except for the sampling operation. Also, the transfer function of the zero order holder is approximated as in the case of Fig. 5 (c) with the sampling operation being taken into consideration. As these transfer functions respectively show the delay time elements, they may be also expressed approximately with one first degree of LPF. Reference numeral 105 is an estimated delay velocity signal Ved obtained from them. Since the construction of the above described simulation circuit is mainly composed of an integrator and a LPF, it becomes gradually different from the behaviors of the actual positioner VCM 6, the data transducer 5 as the time passes. Namely, the simulation (estimation) error becomes larger. The feedback element is attached to the simulation circuit so as to reduce the simulation errors as the time passes. Therefore, the following construction is further added. One 113 of them is a differential element which differentiates the intermittent position signal X (nT) 15 to obtain the intermittent velocity signal V (nT) 115, and is the same as the differential element 72 of Fig. 5 (b). Then, reference numeral 107 is the zero order holder of the conversion element for converting the dispersing velocity signal V (nT) 115 into the measured velocity signal Vm 96 of the continuous amount. Then reference numeral 106 is a subtraction element for subtracting the estimated delay velocity signal Ved from the measured velocity signal Vm. Reference numeral 108 is a feedback velocity error signal Vob of the output thereof, which is multiplied respectively by a feedback coefficient (k7) 109, a feedback coefficient (K8) 110 so as to be added into the current I of 17 by a first adder 111, into the estimated velocity signal Ves of 19 by a second adder 112. It is known on the control theory that such a feedback element is composed of an element, namely, a subtracting element, which obtains the difference between them through the comparison between a measurable variable and an estimation variable (here a measured velocity signal Vm, and an estimated delay velocity signal Ved estimated by the simulation circuit) corresponding to it, and an element for feedbacking it onto the input side through the multiplication of the error to be obtained from here by a proper coefficient (here K7, K8). Errors, if any, between the actual variable and the variable in the simulation circuit corresponding to it are removed as the time passes. As a result, the simulation circuit can estimate the actual system faithfully. Even here more desirable velocity control may be realized by the use of the estimation velocity signal Ves obtained in this manner. It is to be noted that the first degree of LPF of 102 may be a second degree or more.

Fig. 5 (e) is a fifth concrete example of the velocity estimator 16, wherein reference numeral 17 is a current I to be fed into the positioner VCM 6, reference numeral 121 is a Low Pass Filter composed of, for example, an operational amplifier, the element is Kf'/(M'.(τ 4s + 1), so that Kf' = Kf, M' = M. Even here, the $ is the s of the Laplacean. The first degree of Low Pass Filter is to approximately simulate, in a lump, the conversion element into the velocity of the data transducer from the current of the positioner Voice Coil Motor, the differential element 124 for differentiating by the difference subtraction method the intermittent position signal X (nT) 15 to be obtained from the measurable servo information so as to calculate the intermittent velocity information (intermittent velocity signal V (nT) 125), and the zero order holder 127 which is a conversion element for converting it into the continuous amount. The 19 of the output becomes an estimated velocity signal Ves. The operation of the differential element 124 in the embodiment is a retrograding difference retracting method, and is approximated with a dead time transfer function similar to a case of Fig. 5 (c) except for the sampling operation, the transfer function of the zero order holder is approximated as in the case of Fig. 5 (c) with the sampling operation being taken into consideration. As these transfer functions show respectively the delay time elements, they may be expressed approximately with one first degree of Low Pass Filter, with the integral conversion element into the velocity of the data transducer from the current of the positional Voice Coil Motor being provided in a lump. It is to be noted that this is superior in the secondary degree of Low Pass Filter. Since the construction of the simulation circuit is mainly composed of a Low Pass Filter, it becomes gradually different from the behaviors of the actual positioner Voice Coil Motor 6, the data transducer 5 as the time passes. Namely, the simulation (estimation) error becomes larger. The feedback element is attached to the simulation circuit as in this case so as to reduce the simulation errors as the time passes. Therefore, the following construction is further added. One 124 of them is a differential element which differentiates the intermittent position signal X (nT) 15 to obtain the intermittent velocity signal v (nT) 125, and is the same as the differential element 72 of Fig. 5 (b). Then, reference numeral 127 is the zero order holder of the conversion element for converting the intermittent velocity signal V (nT) 125 into the measured velocity signal Vm 123 of the continuous amount. Then, reference numeral 126 is a subtraction element for subtracting the estimated velocity signal Yes from the measured velocity signal Vm. Reference numeral 128 is a feedback velocity error signal Vob of the output thereof, which is multiplied by a feedback coefficient (k9) 129 so as to be added into the current I of 17 by the adder 131. It is known on the control theory that such a feedback element is composed of an element, namely, a subtracting element, which obtains the difference between them through the comparison between a measurable variable and an estimation variable (here a measured velocity signal Vm, and an estimated delay velocity signal Ved estimated by the simulation circuit) corresponding to it, and an element for feedbacking it onto the input side through the multiplication of the error to be obtained from here by a proper coefficient (here K7, K8). Errors, if any, between the actual variable and the variable in the simulation circuit corresponding to it are removed as the time passes. As a result, the simulation circuit can estimate the actual system faithfully. Even here more desirable velocity control may be realized by the use of the estimated velocity signal Yes obtained in this manner.

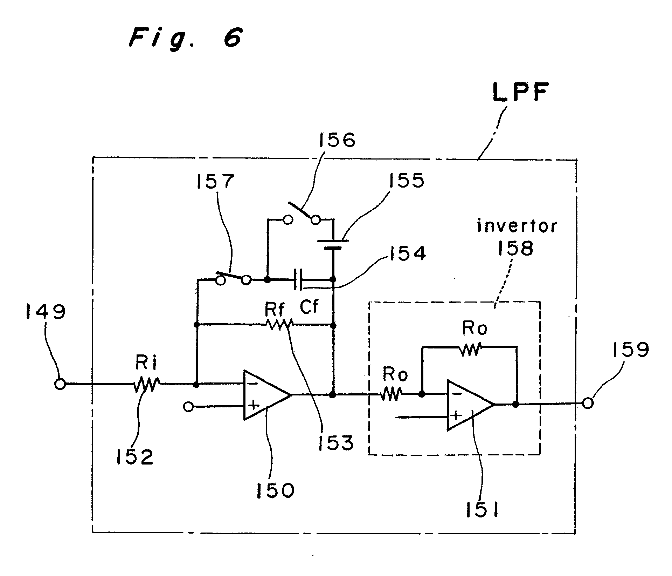

Fig. 6 is a circuit diagram of an integrator or LPF (Low Pass Filter) of the velocity estimator 16 shown with Fig. 5 (a), (b), (c), (d), (e). In the drawings, reference numeral 149 is an input thereof, and reference numeral 159 is an output thereof. Reference numerals 150, 151 are respectively operational amplifiers. The integrator or the Low Pass Filter is composed of a first operational amplifier. An inverter (signal inverter) 158 is composed of the next operational amplifier. Reference numeral 152 is an input resistor Ri. Reference numeral 154 is an integration capacitor Cf. Reference character 153 is a feedback resistor Rf, whose resistance value infinite or higher is used as an integrator. The given numeral value is used as the Low Pass Filter. Reference numerals 156, 157 are switches which give the initial value (voltage) 155 to the integral capacitor Cf so as to close the 156, and open the 157. When the initial value is charged, the switch 156 is opened, and the switch 157 is closed.

Generally, the integrator or the LPF is not necessarily required to be composed of an analogue electronic circuit using such an operational amplifier. It may be composed of a digital filter circuit which may be considered substantially analogue with the sample period being sufficiently shorter as compared with T. It may be realized by the soft wear processing by the high velocity micro-programming.

The present invention may be changed and modified within the scope which does not depart from the idea there-of. As, for example, the zero order holder of Fig. 5 is a dispersing system serial system conversion element, it may be first degree holder or like. Also, the differential elements of Fig. 5 (b), (c), (d), (e) are provided in the retrograding difference retracting method as a concrete example, it is not needless to say that the differential method is not restricted to it.

Also, it is needless to say that the respective blocks of the present invention shown in Fig. 1 may be almost processed in the software. In this meaning, the identifier attached to each block is also a processing function and the flow of the signal of the arrow mark to be connected to each block is also the processing procedure.

As is clear from the foregoing description, the data transducer positioning system of the present invention is related to a velocity control system in the track seeking (accessing) of the data transducer, and realizes the superior seeking control (closed loop velocity control) by the estimation of the velocity of the correcter data transducer velocity mainly from the servo information to be obtained in the intermittent way (sample time T), the decoding of the number (address) of the passing tracks or the passing track inner positions from the intermittent servo information, the production, from them, of the smoother reference velocity (instruction) than before.

Although the present invention has been fully described by way of example with reference to the accompanying drawings, it is to be noted that here that various changes and modifications will be apparent to those skilled in the art. Therefore, unless otherwise such changes and modifications depart from the scope of the present invention, they should be construed as included therein.

**Claims**

1. A data transducer positioning apparatus comprising at least one rotatable disk shaped information record medium (1), servo information (34, 35) being recorded intermittently in advance on the medium, a data transducer (5) which is capable of accessing to the optional information track on the medium and can regenerate at least the contents thereof, a servo information demodulating means (8) for taking out the intermittent servo information from the output of the data transducer, a positional decoder (17) means for intermittently recognizing the position signals of the data transducer from the output thereof, and a positioner means (6) for freely moving the data transducer on the information medium, and characterized in that further comprises a velocity estimating means (16) including at least an integral element or a'low pass filter element so as to obtain the approximately continuous estimated velocity signal of the data transducer with the value of the driving current flowing into the positioner means and the value of the intermittent position signal of the data transducer being provided as inputs, a velocity control means for controlling in velocity the data transducer in accordance with the estimated velocity, the velocity estimating means being adapted to include a subtracting element (20) for calculating an error between an estimated position signal to be obtained from the estimated velocity signal and the above described intermittent position signal, and an element (49, 50) for feedbacking the error signal from the subtraction element to the velocity estimation means.

2. A data transducer positioning apparatus described in accordance with claim 1, wherein the velocity estimating means (16) includes a first integral element or a first low pass filter element, and a second integral element (42) or a second low pass filter element, and is adapted to obtain the estimated velocity signal and the estimated position signal of the data transducer by these elements, further includes a simulation sampler means (44) for making the estimated position signal intermittent in synchronous relation to the intermittent position signal of the data transducer, a subtraction element for calculating the error between the intermittent position signal and the estimated position signal made intermittent, further, an element for feedbacking the error signal from the subtraction element onto the input side of the input side of the integral element or low pass filter element of the velocity estimation means.

3. A data transducer positioning apparatus described in accordance with Claim 1, wherein the velocity estimating means includes an integral element or a low pass filter element and is adapted to obtain the estimated velocity signal of the data transducer by these elements, further includes a simulation samlper means for making the estimated velocity signal intermittent in synchronous relation to the intermittent position signal of the data transducer, a differential element for calculating the intermittent velocity signal from the intermittent position signal, a subtraction element (72) for calculating the error between the estimated velocity signal made intermittent and the intermittent velocity signal, further an element for feedbacking the error signal from the subtraction onto the input side of the input side of the integral element or low pass filter element of the velocity estimating means.

4. A data transducer positioning apparatus described in accordance with claim 1, wherein the velocity estimating means includes an integral element or a low pass filter element and is adapted to obtain the estimated velocity signal of the data transducer by these elements, further includes a differential element for calculating the intermittent velocity signal from the intermittent position signal of the data transducer, a conversion element (97) for converting the intermittent velocity signal into a continuous amount, is provided with at least one low pass filter element for simulating the time delay by the differential element and the conversion element so as to delay the estimated velocity signal to calculate the estimated delay velocity signal, further a subtraction element for calculating the error between the intermittent velocity signal converted into the continuous amount and the estimated delay velocity signal, further an element for feedbacking the error signal from the subtraction element onto the input side of the integral element or the low pass element of the velocity estimating means.

5. A data transducer positioning apparatus described in claim 1, wherein the velocity estimating means includes a low pass filter element and is adapted to obtain the estimated velocity signal of the data transducer by it, further includes a differential element for calculating the intermittent velocity signal from the intermittent position signal of the data transducer, a conversion element for converting the intermittent velocity signal into the continuous amount, further a subtraction element for calculating the error between the converted continuous amount and the estimated velocity signal, further an element for feedbacking the error signal from the subtraction element onto the input side of the the low pass filter element of the velocity estimating means.

6. A data transducer positioning apparatus comprising at least one rotatable disk shaped information record medium (1), servo information (34, 35) being recorded intermittently in advance on the medium, a data transducer (5) which is capable of accessing to the optional information track on the medium and can regenerate at least the contents thereof, a servo information demodulating means (8) for taking out the intermittent servo information from the output of the data transducer, and a positional decoder means (17) for intermittently recognizing the position of the data transducer from the output with a track address decoder and a track inner position decoder for respectively decoding the number or address of the traces where the data transducer exits or passes, and the position within the track, and characterized in that further comprises a means (11) for outputting the reference velocity functioned in accordance with the number of the remaining tracks or the remaining distance on the movement of the data transducer into the selected track at the track access time in accordance with the intermittent position signal of the data transducer to be obtained from these deccders, and a velocity smoother means (12) for interpolating or accommodating the output of the reference velocity which is stage shaped for each sample time, a construction combined with these elements for finally forming the reference velocity instruction signal of the data transducer so as to velocity control the data transducer in accordance with it.

7. A data transducer positioning apparatus described in accordance with claim 6, wherein a means for outputting the functioned reference velocity is a read only memory with the reference velocity being tabled in advance, and is adapted to read it in accordance with the number of the remaining tracks or the remaining distance.

**Fig. 1**

EP 0 431 577 A2

# Fig. 2

servo-sector
32

data-sector
3.1

data-sector
3.1

5 data-transducer

30
information track

36 rotational direction

35 four phases position signal

34 track address

33 DC erase range

# Fig. 3

(a)

V1

(n-4)T (n-3)T (n-2)T (n-1)T nT

t

(b)

V2

(n-4)T (n-3)T (n-2)T (n-1)T nT

t

(c)

Vref

(n-4)T (n-3)T (n-2)T (n-1)T nT

t

# Fig. 4

14 reference command signal

20 velocity error operator

22 compensator

23 current driver

6 positioner VCM

17 current I

30 position of data transducer

Vref

Ver

Kc

Ka

I

Kf

$\dfrac{1}{MS^2}$

X

21 velocity error signal

Ves

16

velocity estimator

19

X(nT)

T

X

31 sampler

15 discrete position signal

# Fig. 5 (a)

16

19 estimate velocity signal

41 first integrator

43 estimate position signal

42 second integrator

44 mimic sampler

17 current I

45 disrete estimate position signal

$$\frac{Kf'}{M'} \cdot \frac{1}{S}$$

$$\frac{1}{S}$$

Ves

Xes

Xes(nT)

51 first adder

52 second adder

50 second feedback factor

K1

K2

49 first feedback factor

Xob

zero-order holder

46 subtraction element

48 feedback position error signal

47

15 discrete position signal

X(nT)

EP 0 431 577 A2

# Fig. 5 (b)

16

17 current I

I

61 integrator

$\dfrac{Kf'}{M'} \cdot \dfrac{1}{S}$

71

19 estimate velocity signal

Ves

64 mimic sampler

Ves Ves(nT)

65 discrete estimate velocity signal

Ves(nT)

66 subtraction element

V(nT)

63 discrete velocity signal

74 finite differentiator

$Z^{-1}$

15 discrete position signal

K3

69 feedback factor

Vob

0 status holder

68 feedback velocity drror signal

67

Vob

o

73 delay element

72 differential element

X(nT)

EP 0 431 577 A2

18

# Fig. 5 (c)

16

81 integrator

17 current I

19 estimate velocity signal

Ves

82 first LPF

83 second LPF

I

$\dfrac{Kf'}{M'} \cdot \dfrac{1}{S}$

$\dfrac{1}{\tau_1 S+1}$

$\dfrac{1}{\tau_2 S+1}$

Ved

85 estimate delay velocity signal

91 first adder

92 second adder

93 third adder

86 subtraction element

K4

K5

K6

Vob

Vm

96 measuring velocity signal

88 first feedback factor

zero-order holder

97

90 third feedback factor

87 feedback velocity error signal

95 discrete velocity signal

$Z^{-1}$

V(nT)

Vob

89 second feedback factor

94 differential element

15 discrete position signal

X(nT)

EP 0 431 577 A2

*Fig. 5 (d)*

# Fig. 5 (e)

16

17 current I

121 LPF

19 estimate velocity signal

Ves

I

131 adder

$\dfrac{Kf'}{M'} \cdot \dfrac{1}{\tau_4 S + 1}$

123 measuring velocity signal

K9

126 subtraction element

125 discrete velocity signal

Vm zero-order holder

V(nT)

129 feedback factor

Vob

127

124 differential element

128 feedback velocity error signal

Vob

o          t

X(nT)

15 discrete position signal

EP 0 431 577 A2

*Fig. 6*